# EUROPEAN PATENT SPECIFICATION

(11) **EP 1 695 927 B1**
(45) Date of publication and mention of the grant of the patent: **22.10.2008**
(21) Application number: 06101429.6
(22) Date of filing: 08.02.2006
(51) Int. Cl.: B65G 47/96, B07C 3/08, B61B 13/04

(54) **Apparatus for selecting and sorting products**
Vorrichtung zum Auswählen und Sortieren von Produkten
Dispositif de sélection et de tri des produits

(30) Priority: 24.02.2005 IT PD20050053
(43) Date of publication of application: 30.08.2006
(73) Proprietor: Gottardo, Alessandro, 35100 Padova (IT)
(72) Inventor: Boraso, Antonio, 35043 Monselice PD (IT); Gottardo, Alessandro, 35100 Padova (IT)
(74) Representative: Modiano, Micaela Nadia

(56) References cited:
- EP-A- 0 285 232
- EP-A- 0 618 123
- GB-A- 2 014 933
- GB-A- 2 113 633
- GB-A- 2 165 510
- US-A- 3 467 024
- US-A- 4 726 464
- US-A1- 2003 038 065

## Description

The present invention relates to an apparatus for selecting and sorting products.

Currently, owing to the increasing differentiation of circulating products, to the increase in the quantities placed on the market of a same product and to the increase in retailers, the companies or departments within manufacturing companies which collect, select and sort a certain type of product arriving from a plurality of different manufacturers to redirect them to shopkeepers or other retailers or final buyers who have requested them, have acquired a primary role.

In the case, given here by way of non-limiting example, of a center for collecting, selecting and sorting bookstore products, the selection and sorting methods currently entail that such products are conveyed manually to the collection containers from an area in which the pallets loaded with products such as books, videocassettes, DVDs and the like arriving from various manufacturers are deposited.

The books and the like requested by a certain retailer, be it a bookstore, a stationery shop, or others, are placed in each container, generally a box, and such box, packed appropriately, is sent to the receiver.

Performing these selection and sorting operations manually requires considerable labor.

This labor is mostly of the seasonal type, since distribution centers for bookstore products are particularly overloaded with work during school opening periods.

Seasonal workers, in addition to having a high cost, are necessarily unspecialized.

This entails substantial risks of error in sorting operations, in which the operator is required to read, on an appropriately provided label applied to each product, the destination container of the product taken from the collection area, and to convey such product in order to store it in the indicated box.

In order to speed up work and reduce the distance to be covered, the operator instinctively tends to pick up from the collection area more than one book or the like, with evident risks of confusing the destination containers.

Apparatuses which comprise a conveyor belt with pockets, below which a plurality of containers are present, are also known in the field of the selection and sorting of bookstore products.

The pockets of the conveyor, inside which books and the like are placed, have a bottom which can be opened.

The conveyor belt proceeds at a substantially constant speed, and when a pocket is located at the corresponding destination container of the conveyed book, it opens its bottom in order to drop the book into the container.

Although this apparatus is very useful, it causes a sudden and uncontrolled fall of the book into the underlying container, mostly due to the inertia with which the book is released from the moving container.

The book thus released is unlikely to be arranged in the box (or other similar packing container) in the best position for optimizing the space available within the box.

Moreover, such an apparatus is spread over a very large area; since the containers are arranged on platforms placed at a single level, differently from what occurs for the manual sorting method, in which each container is stored in a compartment of a plurality of compartments provided on racks having several levels, which accordingly occupy a proportionally smaller area.

US 2003/038065 A1 discloses mail-sorting apparatus having a combination of features as set forth in the pre-characterizing portion of the appended claim 1.

The aim of the present invention is to provide an apparatus for selecting and sorting products which is capable of speeding up selection and sorting operations by eliminating the delays and errors caused by manual execution of these operations.

Within this aim, an object of the present invention is to provide an apparatus for selecting and sorting products which is capable of obviating the problems and drawbacks of known systems, allowing optimum filling of containers accommodated in the compartments of the racks.

Another object of the present invention is to provide an apparatus for selecting and sorting products which gently places the product in the corresponding destination container so as to ensure the integrity of such product.

Another object of the present invention is to provide an apparatus which occupies an area which is not larger than the area defined by the racks used for manual selection and sorting operations.
Another object of the present invention is to provide an apparatus the functionality of which can be changed easily according to the requests that arrive at the sorting center that uses it.

A further object of the present invention is to provide an apparatus which can be used easily even by an operator who lacks particular prior training.

A still further object of the present invention is to provide an apparatus for selecting and sorting products which can be manufactured with known systems and technologies.

In accordance with the invention, there is provided an apparatus for selecting and sorting products, as defined in the appended claims.

Further characteristics and advantages of the invention will become better apparent from the following detailed description of a preferred but not exclusive embodiment thereof, illustrated by way of non-limiting example in the accompanying drawings, wherein:
Figure 1 is a front view of the apparatus according to the invention;
Figure 2 is a top view of the apparatus according to the invention;

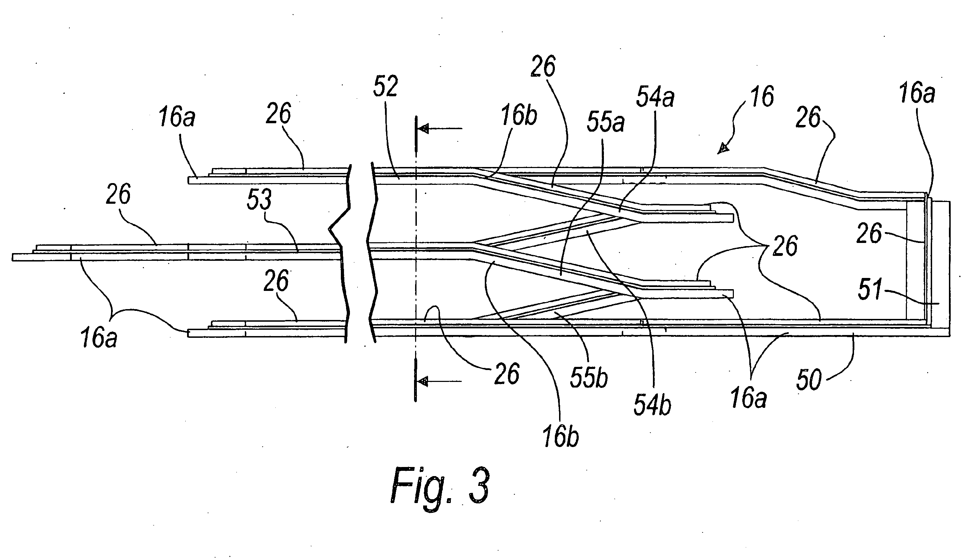

Figure 3 is a side view of a track for the apparatus according to the invention;

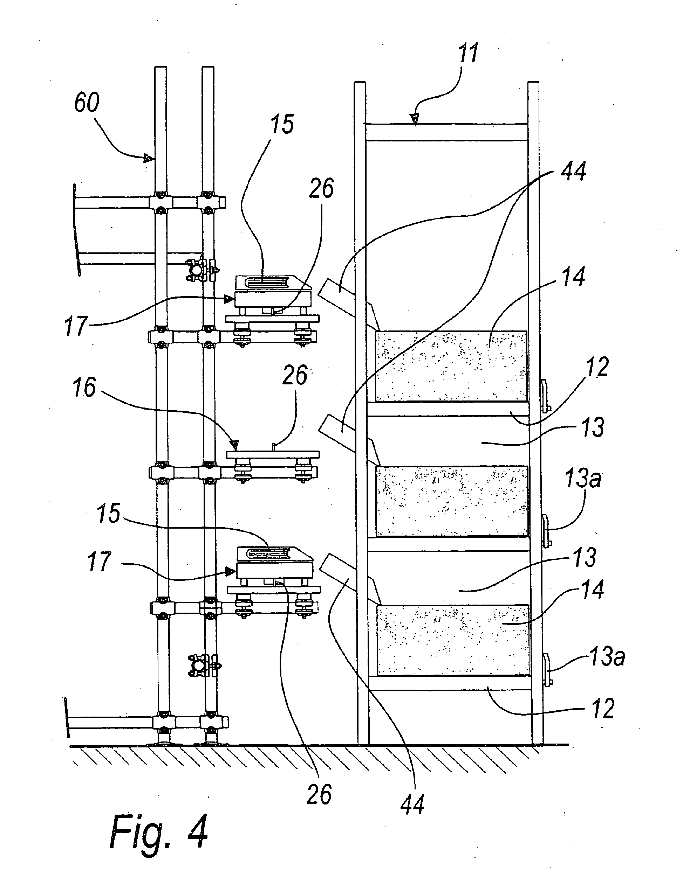

Figure 4 is a sectional front view of a portion of the apparatus according to the invention;
Figure 5 is a front view of a carriage for the apparatus according to the invention;
Figure 6 is a bottom view of a carriage for the apparatus according to the invention;

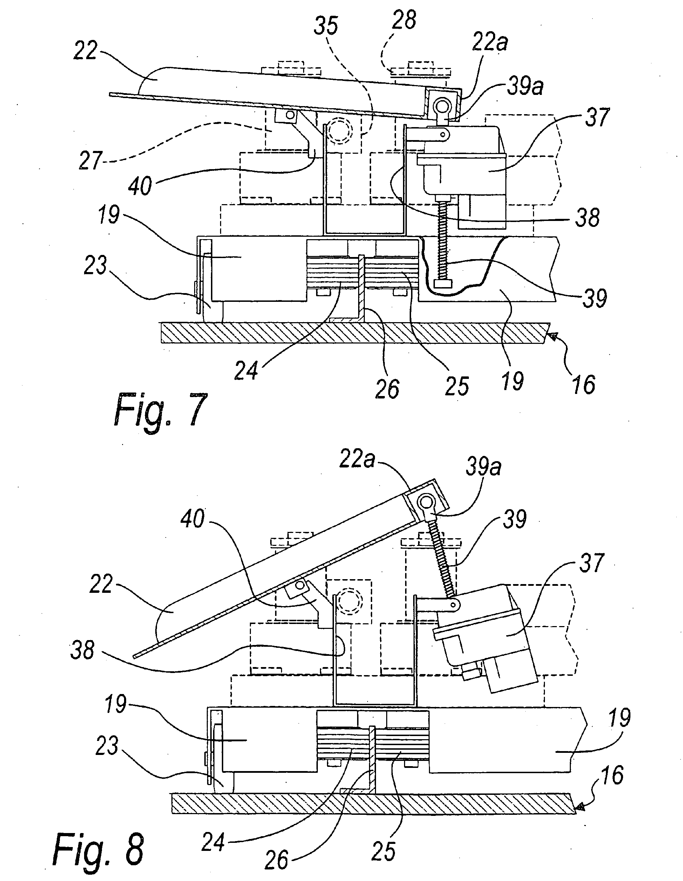

Figure 7 is a partially sectional front view of a carriage in a first configuration;
Figure 8 is a partially sectional front view of a carriage in a second configuration.

With reference to the figures, an apparatus for selecting and sorting products according to the invention is generally designated by the reference numeral 10.

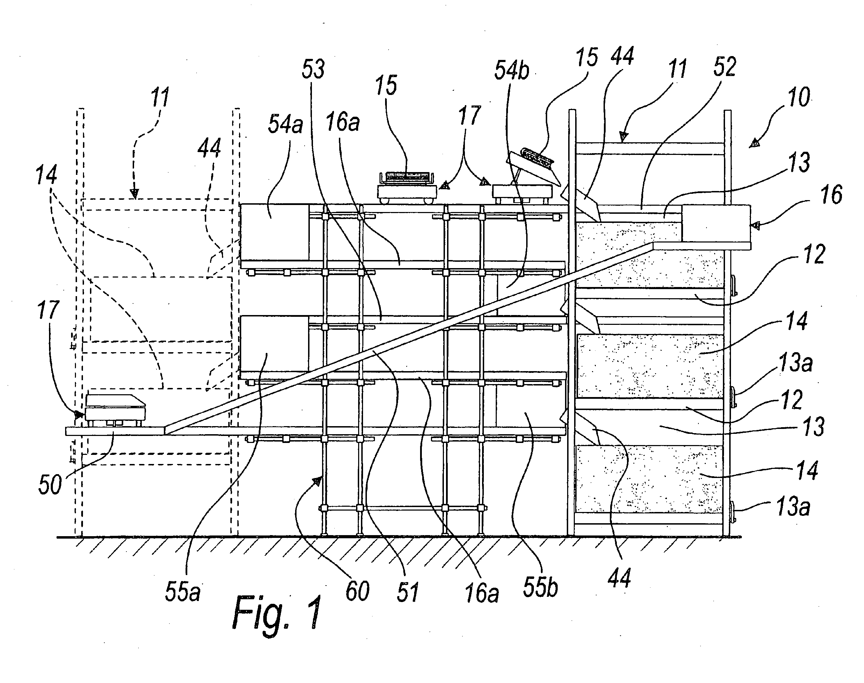

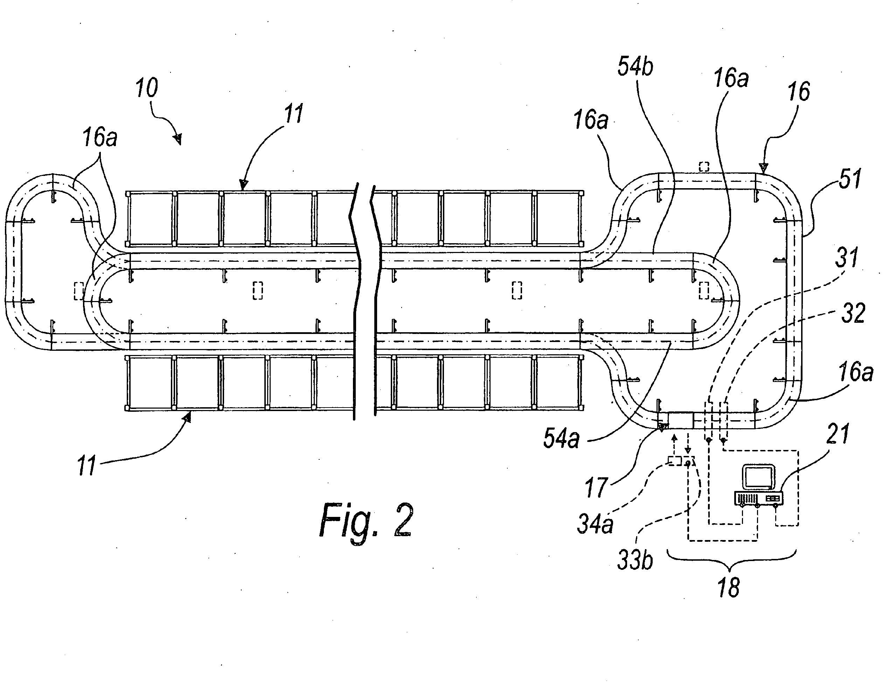

The apparatus 10 is constituted, in the exemplary embodiment described here, by two mutually facing racks 11, as clearly shown both in Figure 1 and in the layout of the apparatus 10 shown schematically in Figure 2.

Each rack 11 comprises three shelves 12.

A plurality of unloading compartments 13 are formed on each shelf 12.

Each compartment 13 accommodates a container 14, which is preset to contain a certain quantity of products 15.

Each compartment 13 is provided with rollers, not shown for the sake of simplicity, on which the containers 14 rest; said rollers are adapted to facilitate the sliding of the containers 14 when they are filled with products 15 and must be removed from the compartment 13.

At each compartment 13, the shelves 12 have rotatable locking bars 13a for retaining the containers 14; such bars are pivoted at their outer edge and are adapted to prevent the fall of one product 15 into the container 14 from making the container protrude from the shelf 12 of the rack 11.

The containers 14 are constituted generally by cardboard boxes or equivalents.

The shelves 12 are reached by a helical track 16, on which a plurality of carriages 17 are arranged movably for conveying and unloading the products 15 from a loading area 18 of the track 16 to the containers 14.

The track 16 is constituted as follows.

From the loading area 18, formed by a straight portion which is approximately one meter long and at which the carriages 17 are each loaded with one product 15, the carriages 17 travel from the lowest level 50, located at the height of the lowest shelf 12, toward an upward ramp 51, which leads to the highest level 52, which lies at the same height as the highest shelf 12.

The highest level 52 serves all the compartments 13 of the highest shelf 12.

The track 16 descends to the intermediate level 53, which serves the compartments 13 of the corresponding intermediate shelf 12, by means of a downward ramp divided into two portions 54a and 54b, between which a bend 16a is arranged.

Likewise, the downward ramp from the intermediate level 53 to the lower level 50, which serves the compartments 13 of the lowest shelf 12, is constituted by two inclined straight portions 55a and 55b, which are connected by an additional flat bend 16a.

Each one of the carriages 17 is constituted by a wheeled chassis 19 provided with:
- means for movement along the track 16,
- interface means for exchanging information between an onboard computer 20 and a ground unit 21 for managing the products 15;
- collision prevention means for spacing from an identical leading or following carriage 17;
- means for detecting the position of the carriage 17 on the track 16,
- a tray 22 for the product 15 to be conveyed,
- means for unloading the product 15 from the tray 22 onto the destination container 14;
- power supply means.

The generic carriage 17 travels along the track 16 by resting thereon with four free wheels 23.

The movement means are constituted by two motorized rollers 24 and 25, which have parallel axes, face each other, rotate in mutually opposite directions and are arranged so as to run by rolling friction on the two mutually opposite sides of a guiding blade 26 interposed between them.

The blade 26 runs along the entire track 16 and is constituted by an L-shaped profile made of metal plate, in which the horizontal wing is fixed to the track 16.

The blade 26, thanks to its low thickness, allows the carriages 17 to follow relatively tight bends 16a with respect to other known types of monorail apparatus.

The capability to set up the apparatus 10 with a track 16 which has tight bends 16a allows to reduce the mutual spacing of the racks 11 as the tightness of the bends 16a increases, with consequently savings on the area occupied by the apparatus 10.

The speed and direction of rotation of the rollers 24 and 25 are defined by the onboard computer 20, the functions of which are described in greater detail hereinafter, which is adapted to drive the electric motors, respectively 27 and 28, of each roller 24 and 25.

The motorized rollers 24 and 25 are both constituted symmetrically by stacked washers, made of plastic material or rubber-like material, so as to generate the maximum possible friction on the blade 26 with which they make contact.

The rollers 24 and 25 are arranged in the front part of the carriage 17, while below the rear part of the chassis 19 there is a rigidly coupled pair of facing free rollers 29 and 30 for preventing hunting, which are likewise in contact with the two mutually opposite sides of the guiding blade 26.

The interface means are adapted to transfer from the ground unit 21, arranged at the loading area 18, to the onboard computer 20 information related to the loaded product 15 and to the unloading compartment 13 for which the loaded product is intended, and vice versa to transfer from the onboard computer 20 to the ground unit 21 information related to the operations performed by the carriage 17.

The ground unit 21 is substantially a computer of a known type, provided with software designed specifically for managing orders and the apparatus 10.

The operation for conveying and unloading the product 15 is managed, according to the information exchanged with the ground unit 21, autonomously by the onboard computer 20, which performs it by way of said movement and unloading means functionally connected thereto.

The ground unit 21 is functionally connected to a device 31 for measuring the thickness of the loaded product 15 and to a reader 32 for reading the label with the identification code applied to the product 15.

As an alternative, the identification code to be read is printed directly on the cover of the product 15.

The code, generally of the bar-code type, which is read by the reader 32 when the carriage 17 is stationary at the loading area 18, contains information regarding the receiver of the product 15 to which the label is applied.

The ground unit 21 possesses the information related to which compartment 13 holds the container 14 to be sent to said receiver.

The ground unit 21 therefore identifies the destination compartment 13 of the product 15 onto which the label is applied and sends this information to the onboard computer 20 by way of the already-mentioned interface means, described in greater detail hereinafter.

The measurement device 31 is constituted, in the exemplary embodiment described here, by an ultrasound sensor.

The information related to the thickness of the product 15 is added to the thickness measurements of the products that have already been sent to the same compartment 13, so that the ground unit 21 knows when the container 14 in the compartment 13 is still able to receive products 15 or when instead it is no longer capable of containing further products and must be replaced with an additional empty container 14.

The measurement device 31 and the reader 32 are arranged so as to lie above the track 16 at the loading area 18, once the carriage 17 is stationary in the holding position and is awaiting new instructions regarding the destination compartment.

The interface means for exchanging information between the onboard computer 20 and the ground unit 21 are constituted by two infrared ports.

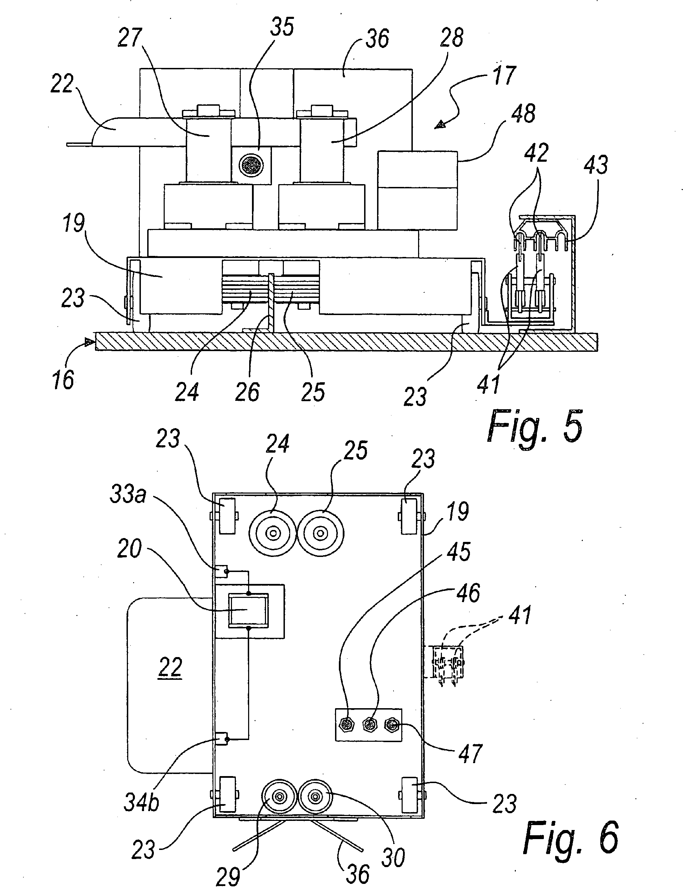

A first port is formed by an LED 33a, which is fixed laterally to the chassis 19 of the carriage 17 (as shown schematically in Figure 6), and outputs information from the computer 20 toward a receiver diode 33b, which is arranged on the edge of the track 16 and is connected to the ground unit 21 at the loading area 18 (as shown schematically in Figure 2).

A second port is formed by an additional diode 34b, which is also fixed laterally to the chassis 19, for receiving information from the ground unit 21 toward the computer 20; said diode is adapted to face, at the loading area 18, an additional LED 34a, which is connected to the unit 21.

The first port 33a and 33b transfers information from the computer 20 to the unit 21 regarding the "mission" that has just been completed by the carriage 17; by way of the second port 34a and 34b, the unit 21 reports the new destination to the computer 20.

As mentioned, each carriage 17 is provided with collision prevention means.

Such collision prevention means, i.e., means for spacing from an identical leading or trailing carriage, are constituted by a proximity sensor 35, which is rigidly coupled to the carriage 17 and is directed in the travel direction of the carriage 17, each carriage 17 being provided at the rear with a screen 36.

The screen 36 is contoured so as to allow the sensor 35 of a trailing carriage 17 to determine the presence and distance of the carriage 17 in front even at the bends 16a and rises 16b of the track 16.

For example, the sensor 35 is a photocell or another equivalent element.

Each carriage 17 can move independently on the track by way of the means for detecting its own position on the track 16 with which it is provided.

The detection means are formed by three sensors, respectively 45, 46 and 47, which are fixed to the chassis 19 and look outward proximate to the track 16 so as to read respective paths formed on the track 16 by plates made of metallic material.

The first sensor 45 is intended to control the activation of the operation for stopping and positioning the carriage 17 at the preset destination unloading compartment 13.

The first sensor 45 counts the compartments 13 which it passes, and where the carriage arrives at the destination compartment 13 it activates the stop operation, which is managed by the computer 20, which blocks the electric motors 27 and 28.

Stopping occurs in a little over 10 centimeters and is followed by the operation for positioning the carriage 17 correctly in front of the chute 44 for unloading the compartment 13, an operation in which the computer 20 forces the electric motors 27 and 28 to turn in the opposite direction with respect to the travel operation, at reduced speed, until the sensor 45 detects below it the presence of the plate which indicates correct positioning.

A second sensor 46 is intended to start the step for slowing the carriage 17 at the loading area 18.

The third sensor 47 is adapted to supervise the stopping of the carriage 17 in the loading area 18, in such a position that the product 15 that has just been loaded is available to the device 31 for measuring the thickness of the product 15 and to the reader 32 of the label provided with a bar code.

As mentioned, the stop position in the loading area 18 allows the operation of the two infrared ports 33a, 33b and 34a, 34b.

The sensors 45, 46 and 47 are interfaced with a counter 48, which in turn is functionally connected to the onboard computer 20.

The sensors 45, 46 and 47 are, in the exemplary embodiment described here, of the induction type or of an equivalent type.

The means for unloading the product 15 from the tray 22 into the container 14 are constituted by an electric gearmotor 37, which is pivoted with a horizontal axis to a support 38 which is rigidly coupled to the chassis 19.

The gearmotor 37 is adapted to move by translational motion, by means of a device of the worm screw type, a lifting/lowering bar 39, the upper end 39a of which is rotatably coupled to the rear part 22a of the tray 22.

The tray 22 is pivoted centrally by way of hinges 40 to the support 38.

The unloading means are completed by chutes 44, which are fixed to the edge of the rack 11, one for each one of the unloading compartments 13.

The chutes 44 guide the fall of the products 15 from the tray 22, in the raised configuration, into the container 14.

The power supply means are formed, in the described exemplary embodiment, by two sliding contacts, each formed by an arm 41 for supporting a metallic plate in contact with a corresponding conducting line 42, which runs along the track 16.

The two conducting lines 42, shown in Figure 5, are arranged within a multiple channel 43 made of insulating material.

The multiple channel 43 therefore has at least two seats for the arrangement of the conducting lines 42 parallel to each other.

The power supply means can be also constituted by other equivalent power supply means, for example of the induction type, without sliding contacts.

The apparatus 10 provided with carriages 17 is very flexible, thanks to the low cost of the track 16, which is composed of panels of wood-like material supported by a frame 60 composed of commercial tubing and therefore can be adapted easily to racks having the most disparate layouts, but also and especially thanks to the variability of the number of active carriages 17.

With fifty carriages 17 it is in fact possible to serve up to three hundred compartments 13, but the number of carriages 17 in service can be reduced in periods of lower inflow of products 15 simply by removing from the track the unused carriages and then returning them in high-season periods.

In practice it has been found that the invention thus described solves the problems noted in known sorting and selection methods and apparatuses.

In particular, the present invention provides an apparatus for selecting and sorting products which is capable of speeding up selection and sorting operations by eliminating the delays and errors arising from manual execution of these operations.

Moreover, the present invention provides an apparatus for selecting and sorting products which is capable of obviating the problems and drawbacks of known apparatuses, allowing optimum filling of the containers accommodated in the compartments of the racks.

Further, the present invention provides an apparatus for selecting and sorting products which gently rests the product in the corresponding destination container, ensuring the integrity of said product.

Moreover, the present invention provides an apparatus which occupies an area which is not greater than the area defined by the racks used for manual selection and sorting operations.

Further, the present invention provides an apparatus the functionality of which can be changed easily depending on requirements of the demand arriving to the sorting center that uses it.

Moreover, the present invention provides an apparatus which can be used easily even by an operator who does not have particular prior training.

Moreover, the present invention provides an apparatus for selecting and sorting products which can be manufactured with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for selecting and sorting products, comprising at least one rack (11), on the shelves (12) of which there are a plurality of unloading compartments (13) for containers (14) for said products (15), said shelves (12) being reached by a helical track (16), on which a plurality of carriages (17) are arranged each constituted by a wheeled chassis (19) having means for movement along the track (16) and each arranged movably to convey and unload the products (15) from a loading area (18) of said track (16) to said containers (14), each of which is arranged in a corresponding unloading compartment (13), each carriage (17) being further provided with an onboard computer (20), defining the speed and direction of rotation of a motorized roller of said movement means, said computer (20) being adapted to control the electric motor of said roller, the apparatus being **characterized in that** each carriage (17) travels along said track (16) by resting thereon with four free wheels (23), and by said movement means comprising two motorized rollers (24, 25), which have parallel axes, face each other, rotate in mutually opposite directions and are arranged so as to run by rolling friction along the two mutually opposite sides of a guiding blade (26) interposed between them, said blade being arranged along the entire track (16), the speed and direction of rotation of said rollers (24, 25) being defined by said onboard computer (20), which is adapted to control the electric motors (27, 28) of each roller (24, 25).

2. The apparatus according to claim 1, **characterized in that** said motorized rollers (24, 25) are arranged in the front part of the carriage (17), below the rear part of the chassis (19) there being a rigidly coupled pair of facing rollers (29, 30) for preventing hunting, said rollers being likewise in contact with the two mutually opposite sides of said guiding blade (26).

3. The apparatus according to claims 1 or 2, **characterized in that** each one of said carriages (17) constituted by a wheeled chassis (19) is further provided with:
- interface means for exchanging information between said onboard computer (20) and a ground unit (21) for managing the products (15);
- collision prevention means for spacing from an identical leading or trailing carriage (17);
- means for detecting the position of the carriage (17) on the track (16);
- a tray (22) for a product to be conveyed (15);
- means for unloading the product (15) from the tray (22) to the destination container (14);
- power supply means.

4. The apparatus according to claim 3, **characterized in that** said interface means are adapted to transfer from said unit (21) to said onboard computer (20) information related to the loaded product (15) and to the unloading compartment (13) for which said loaded product is intended, and vice versa to transfer from said onboard computer (20) to said ground unit (21) information related to the operations performed by said carriage (17).

5. The apparatus according to one or more of claims 3-4, **characterized in that** the operation for conveying and unloading the product (15) is managed, on the basis of the information exchanged with the ground unit (21), by said onboard computer (20) by way of said movement and unloading means functionally connected thereto.

6. The apparatus according to one or more of claims 3-5, **characterized in that** said ground unit (21) is functionally connected to a device (31) for measuring the thickness of the loaded product (15) and to a reader (32) for reading the identification code of the product (15), said code being adapted to identify the destination compartment (13) of the product (15) onto which said label is applied, said measurement device (31) and said reader (32) being arranged so as to lie above the track (16) at the loading area (18).

7. The apparatus according to one or more of claims 3-6, **characterized in that** said interface means for exchanging information between the onboard computer (20) and the ground unit (21) for managing the products (15) are constituted by two infrared ports, a first port formed by a LED (33a), which is fixed laterally to the chassis (19) of the carriage (17), for sending information from the computer (20) to a receiver diode (33b) which is arranged on the edge of the track (16) and is connected to the ground unit (21) at the loading area (18), and a second port formed by an additional diode (34b), which is also fixed laterally to the chassis (19), for receiving information from the ground unit (21) toward the computer (20), and is adapted to face, in the loading area (18), an additional LED (34a) which is connected to the unit (21).

8. The apparatus according to one or more of claims 3-7, **characterized in that** said collision prevention means are constituted by a proximity sensor (35), which is rigidly coupled to the carriage (17) and is directed in the direction of advancement of said carriage (17), each carriage (17) being provided, at the rear, with a screen (36) which is contoured so as to allow the sensor (35) of a trailing carriage (17) to determine the presence and distance of the leading carriage (17) even at bends (16a) and rises (16b) of the track (16).

9. The apparatus according to claim 8, **characterized in that** said sensor (35) is a photocell.

10. The apparatus according to one or more of claims 3-9, **characterized in that** said means for detecting the position of the carriage on the track are formed by sensors (45, 46, 47), which are fixed to the chassis (19) and look outward proximate to the track (16) so as to read respective paths formed on the track (16) by plates made of metallic material, a first sensor (45) being intended to control the activation of the operation for stopping and positioning the carriage (17) at the preset destination unloading compartment (13), a second sensor (46) being intended to start the step for slowing the carriage (17) at the loading area (18), the third sensor (47) being adapted to supervise the stopping of the carriage (17) in the loading area (18) in such a position that the product (15) that has just been loaded is available to the device (31) for measuring the thickness of the product (15) and to the reader (32) of the label provided with a bar code, said stop position allowing the operation of said infrared ports (33a, 33b, 34a, 34b), said sensors (45, 46, 47) being interfaced with a counter (48), which in turn is functionally connected to said onboard computer (20).

11. The apparatus according to claim 10, **characterized in that** said sensors (45, 46, 47) are of the inductive or equivalent type.

12. The apparatus according to one or more of claims 3-11, **characterized in that** said means for unloading the product (15) from the tray (22) into the container (14) are constituted by an electric gearmotor (37), which is pivoted with a horizontal axis to a support (38), which is rigidly coupled to the chassis (19) and is adapted to move by translational motion, by way of a device of the worm screw type, a lifting/lowering bar (39), the upper end (39a) of which is coupled rotatably to the rear part (22a) of the tray (22), said tray (22) being pivoted centrally by means of hinges (40) to said support (38).

13. The apparatus according to claim 12, **characterized in that** the unloading means are completed by chutes (44), which are fixed to the edge of the rack (11), one for each one of said unloading compartments (13), said chutes (44) being adapted to guide the fall of the products (15) from the tray (22) into the container (14).

14. The apparatus according to one or more of claims 3-13, **characterized in that** said power supply means are formed by two sliding contacts, each formed by an arm (41) for supporting a metallic plate which is in contact with a corresponding conducting line (42), which runs along the track (16) within a multiple channel (43) made of insulating material, said multiple channel (43) being provided with at least two seats for the arrangement of the conducting lines (42) parallel to each other.

## Patentansprüche

1. Eine Vorrichtung zum Auswählen und Sortieren von Produkten, die mindestens ein Gestell (11) umfasst, auf dessen Regalen (12) sich eine Vielzahl von Ablade-Fächern (13) für Behälter (14) für die Produkte (15) befindet, wobei die Regale (12) von einer spiralförmigen Bahn (16) erreicht werden, auf welcher eine Vielzahl von Schlitten (17) angeordnet ist, von denen jeder aus einem Chassis (19) mit Rädern besteht, das Mittel zur Bewegung entlang der Bahn (16) hat, und von denen jeder beweglich angeordnet ist, um die Produkte (15) von einer Beladefläche (18) der Bahn (16) in die Behälter (14) zu befördern und zu entladen, von denen jeder in einem entsprechenden Ablade-Fach (13) angeordnet ist, wobei jeder Schlitten (17) weiter mit einem Bordcomputer (20) ausgestattet ist, welcher die Geschwindigkeit und Drehrichtung einer motorisierten Rolle des Bewegungsmittels bestimmt, wobei der Computer (20) ausgebildet ist, um den Elektromotor der Rolle zu steuern, wobei die Vorrichtung **dadurch gekennzeichnet ist, dass** jeder Schlitten (17) sich an der Bahn (16) entlang bewegt, indem er darauf mit vier freien Rädern (23) ruht, und **dadurch**, dass das Bewegungsmittel zwei motorisierte Rollen (24, 25) umfasst, welche parallele Achsen haben, einander gegenüberliegen, sich in entgegengesetzte Richtungen drehen und so angeordnet sind, dass sie durch Rollreibung entlang den beiden einander gegenüberliegenden Seiten eines Leitblatts (26) laufen, das zwischen ihnen angeordnet ist, wobei das Blatt entlang der gesamten Bahn (16) angeordnet ist wobei die Geschwindigkeit und Drehrichtung der Rollen (24, 25) von dem Bordcomputer (20) bestimmt werden, welcher ausgebildet ist, um die Elektromotoren (27, 28) jeder Rolle (24, 25) zu steuern.

2. Die Vorrichtung gemäß Anspruch 1, **dadurch gekennzeichnet, dass** die motorisierten Rollen (24, 25) im vorderen Teil des Schlittens (17) angeordnet sind, wobei sich unterhalb des hinteren Teils des Chassis (19) ein starr gekoppeltes Paar einander gegenüberliegender Rollen (29, 30) zur Verhinderung einer Pendelbewegung befindet und die Rollen ebenfalls im Kontakt mit den beiden einander gegenüberliegenden Seiten des Leitblatts (26) stehen.

3. Die Vorrichtung gemäß Anspruch 1 oder 2, **dadurch gekennzeichnet, dass** jeder der Schlitten (17), die aus einem Chassis (19) mit Rädern bestehen, weiter ausgestattet ist mit:
- Schnittstellenmitteln zum Austausch von Informationen zwischen dem Bordcomputer (20) und einer Bodeneinheit (21) zur Verwaltung der Produkte (15),
- Kollisionsverhinderungsmitteln zur Einhaltung eines Abstands von einem identischen vorhergehenden oder nachfolgenden Schlitten (17),
- Mitteln zur Erfassung der Position des Schlittens (17) auf der Bahn (16),
- einer Wanne (22) für ein zu transportierendes Produkt (15),
- Mitteln zum Abladen des Produkts (15) aus der Wanne (22) in den Zielbehälter (14),
- Stromversorgungsmitteln.

4. Die Vorrichtung gemäß Anspruch 3, **dadurch gekennzeichnet, dass** die Schnittstellenmittel ausgebildet sind, um von der Einheit (21) an den Bordcomputer (20) Informationen bezüglich des geladenen Produkts (15) und des Ablade-Fachs (13) zu übertragen, für welches das geladene Produkt bestimmt ist, und umgekehrt von dem Bordcomputer (20) an die Bodeneinheit (21) Informationen bezüglich der Arbeiten zu übertragen, die von dem Schlitten (17) durchgeführt werden.

5. Die Vorrichtung gemäß einem oder mehreren der Ansprüche 3-4, **dadurch gekennzeichnet, dass** der Vorgang des Beförderns und Entladens des Produkts (15) anhand der mit der Bodeneinheit (21) ausgetauschten Informationen von dem Bordcomputer (20) mit Hilfe der Bewegungs- und Ablademittel verwaltet wird, die funktionell damit verbunden sind.

6. Die Vorrichtung gemäß einem oder mehreren der Ansprüche 3-5, **dadurch gekennzeichnet, dass** die Bodeneinheit (21) funktionell mit einer Vorrichtung (31) zur Messung der Dicke des geladenen Produkts (15) und mit einem Lesegerät (32) zum Lesen des Erkennungscodes des Produkts (15) verbunden ist, wobei der Code ausgebildet ist, um das Zielfach (13) des Produkts (15), auf welches das Etikett aufgetragen ist, zu bestimmen, wobei die Messvorrichtung (31) und das Lesegerät (32) so angeordnet sind, dass sie oberhalb der Bahn (16) an der Beladefläche (18) liegen.

7. Die Vorrichtung gemäß einem oder mehreren der Anspruche 3-6, **dadurch gekennzeichnet, dass** die Schnittstellenmittel zum Austausch von Informationen zwischen dem Bordcomputer (20) und der Bodeneinheit (21) zur Verwaltung der Produkte (15) aus zwei Infrarot-Ausgängen bestehen, wobei ein erster Ausgang von einer LED (33a) gebildet wird, die seitlich am Chassis (19) des Schlittens (17) befestigt ist, zum Senden von Informationen vom Computer (20) an eine Empfängerdiode (33b), die am Rand der Bahn (16) angeordnet und mit der Bodeneinheit (21) an der Beladefläche (18) verbunden ist, und ein zweiter Ausgang von einer weiteren Diode (34b) gebildet wird, die ebenfalls seitlich am Chassis (19) befestigt ist, zum Empfang von Informationen von der Bodeneinheit (21) für den Computer (20), und die ausgebildet ist, um an der Beladefläche (18) einer zusätzlichen LED (34a) gegenüberzuliegen, die mit der Einheit (21) verbunden ist.

8. Die Vorrichtung gemäß einem oder mehreren der Ansprüche 3-7, **dadurch gekennzeichnet, dass** die Kollisionsverhinderungsmittel aus einem Näherungssensor (35) bestehen, der starr mit dem Schlitten (17) gekoppelt und in die Bewegungsrichtung des Schlittens (17) ausgerichtet ist, wobei jeder Schlitten (17) an der Rückseite mit einem Bildschirm (36) ausgestattet ist, der so geformt ist, dass er es dem Sensor (35) eines nachfolgenden Schlittens (17) ermöglicht, das Vorhandensein und den Abstand des vorhergehenden Schlittens (17) selbst bei Biegungen (16a) und Erhöhungen (16b) der Bahn (16) zu bestimmen.

9. Die Vorrichtung gemäß Anspruch 8, **dadurch gekennzeichnet, dass** der Sensor (35) eine Fotozelle ist.

10. Die Vorrichtung gemäß einem oder mehreren der Ansprüche 3-9, **dadurch gekennzeichnet, dass** die Mittel zur Erfassung der Position des Schlittens auf der Bahn von Sensoren (45, 46, 47) gebildet werden, welche am Chassis (19) befestigt sind und nach außen in der Nähe der Bahn (16) hin gerichtet sind, um entsprechende Pfade zu lesen, die auf der Bahn (16) von Platten aus metallischem Material gebildet werden, wobei ein erster Sensor (45) dazu dient, die Aktivierung der Operation zum Anhalten und Positionieren des Schlittens (17) am voreingestellten Ziel-Ablade-Fach (13) zu steuern, und ein zweiter Sensor (46) dazu dient, den Schritt zum Verlangsamen des Schlittens (17) an der Beladefläche (18) zu starten, wobei der dritte Sensor (47) ausgebildet ist, um das Anhalten des Schlittens (17) an der Beladefläche (18) in einer solchen Position zu überwachen, dass das soeben geladene Produkt (15) der Vorrichtung (31) zum Messen der Dicke des Produkts (15) und dem Lesegerät (32) des mit einem Strichcode versehenen Etiketts zur Verfügung steht, wobei die Anhalte-Position den Betrieb der Infrarot-Anschlüsse (33a, 33b, 34a, 34b) ermöglicht und die Sensoren (45, 46, 47) mit einem Zähler (48) verbunden sind, welcher wiederum funktionell mit dem Bordcomputer (20) verbunden ist.

11. Die Vorrichtung gemäß Anspruch 10, **dadurch gekennzeichnet, dass** die Sensoren (45, 46, 47) vom induktiven oder einem äquivalenten Typ sind.

12. Die Vorrichtung gemäß einem oder mehreren der Ansprüche 3-11, **dadurch gekennzeichnet, dass** die Mittel zum Abladen des Produkts (15) aus der Wanne (22) in den Behälter (14) aus einem elektrischen Getriebemotor (37) bestehen, der mit einer horizontalen Achse drehgelenkig an einem Ständer (38) befestigt ist, welcher starr mit dem Chassis (19) gekoppelt und ausgebildet ist, um durch Translationsbewegung, mit Hilfe einer Vorrichtung des Schneckentyps, eine Hub-/Senkstange (39) zu bewegen, deren oberes Ende (39a) drehbar mit dem hinteren Teil (22a) der Wanne (22) gekoppelt ist, wobei die Wanne (22) mit Hilfe von Scharnieren (40) drehgelenkig zentral mit dem Ständer (38) verbunden ist.

13. Die Vorrichtung gemäß Anspruch 12, **dadurch gekennzeichnet, dass** die Ablademittel durch Rutschen (44) ergänzt werden, die am Rand des Gestells (11) befestigt sind, eine für jedes der Ablade-Fächer (13), wobei die Rutschen (44) ausgebildet sind, um das Fallen der Produkte (15) aus der Wanne (22) in den Behälter (14) zu lenken.

14. Die Vorrichtung gemäß einem oder mehreren der Ansprüche 3-13, **dadurch gekennzeichnet, dass** die Stromversorgungsmittel von zwei Gleitkontakten gebildet werden, jeder gebildet von einem Arm (41) zum Tragen einer Metallplatte, die in Kontakt mit einer entsprechenden Leitung (42) steht, welche entlang der Bahn (16) innerhalb eines Mehrfachkanals (43) verläuft, der aus Isoliermaterial besteht, wobei der Mehrfachkanal (43) mit mindestens zwei Sitzen zur Anordnung der Leitungen (42) parallel zueinander ausgestattet ist.

## Revendications

1. Dispositif pour sélectionner et trier des produits, comprenant au moins un râtelier (11),sur les étagères (12) duquel se trouvent une pluralité de compartiments de déchargement (13) pour des récipients (14) pour lesdits produits (15), lesdites étagères (12) étant atteintes par une piste hélicoïdale (16), sur laquelle se trouvent une pluralité de chariots (17) constitués chacun par un châssis à roues (19) comportant des moyens pour un déplacement le long de la piste (16) et disposés chacun de façon à pouvoir se déplacer de façon à convoyer et à décharger les produits (15) à partir d'une zone de chargement (18) de ladite piste (16) vers lesdits récipients (14), chacun d'entre eux étant disposé dans un compartiment de déchargement correspondant (13), chaque chariot (17) étant de plus muni d'un ordinateur embarqué (20), définissant la vitesse et la direction de rotation d'un rouleau motorisé desdits moyens de déplacement, ledit ordinateur (20) étant adapté pour commander le moteur électrique dudit rouleau, le dispositif étant **caractérisé en ce que** chaque chariot (17) se déplace le long de ladite piste (16) en reposant sur celle-ci avec quatre roues libres (23), et **en ce que** lesdits moyens de déplacement comprennent deux rouleaux motorisés (24, 25), qui comportent des axes parallèles, se font mutuellement face, tournent dans des directions mutuellement opposées et sont agencés de façon à se déplacer par frottement de roulement le long des deux côtés mutuellement opposés d'une lame de guidage (26) interposée entre ceux-ci, ladite lame étant disposée le long de la totalité de la piste (16), la vitesse et la direction de rotation desdits rouleaux (24, 25) étant définies par ledit ordinateur embarqué (20), qui est adapté pour commander les moteurs électriques (27, 28) de chaque rouleau (24, 25).

2. Dispositif selon la revendication 1, **caractérisé en ce que** lesdits rouleaux motorisés (24, 25) sont disposés dans la partie avant du chariot (17), une paire rigidement couplée de rouleaux en vis-à-vis (29, 30) étant disposés en dessous de la partie arrière du châssis (19) pour empêcher la chasse, lesdits rouleaux étant de même en contact avec les deux côtés mutuellement opposés de ladite lame de guidage (26).

3. Dispositif selon les revendications 1 ou 2, **caractérisé en ce que** chacun desdits chariots (17) constitués par un châssis à roues (19) est de plus muni :
- de moyens formant interface pour échanger une information entre ledit ordinateur embarqué (20) et une unité au sol (21) pour gérer les produits (15) ;
- de moyens de prévention de collision pour l'espacement par rapport à un chariot avant ou arrière identique (17) ;
- de moyens pour détecter la position du chariot (17) sur la piste (16) ;
- d'un plateau (22) pour un produit devant être convoyé (15) ;
- de moyens pour décharger le produit (15) à partir du plateau (22) vers le récipient de destination (14) ;
- de moyens d'alimentation.

4. Dispositif selon la revendication 3, **caractérisé en ce que** lesdits moyens formant interface sont adaptés pour transférer de ladite unité (21) audit ordinateur embarqué (20) une information concernant le produit chargé (15) et le compartiment de déchargement (13) pour lequel ledit produit chargé est prévu, et, inversement, pour transférer dudit ordinateur embarqué (20) à ladite unité au sol (21) une information concernant les opérations effectuées par ledit chariot (17).

5. Dispositif selon l'une ou plusieurs des revendications 3 à 4, **caractérisé en ce que** l'opération pour convoyer et décharger le produit (15) est gérée, en fonction de l'information échangée avec l'unité au sol (21), par ledit ordinateur embarqué (20) à l'aide desdits moyens de déplacement et de déchargement connectés de façon opérationnelle à celui-ci.

6. Dispositif selon l'une ou plusieurs des revendications 3 à 5, **caractérisé en ce que** ladite unité au sol (21) est connectée de façon opérationnelle à un dispositif (31) pour mesurer l'épaisseur du produit chargé (15) et à un lecteur (32) pour lire le code d'identification du produit (15), ledit code étant adapté pour identifier le compartiment de destination (13) du produit (15) sur lequel ladite étiquette est appliquée, ledit dispositif de mesure (31) et ledit lecteur (32) étant agencés de façon à se trouver au-dessus de la piste (16) dans la zone de chargement (18).

7. Dispositif selon l'une ou plusieurs des revendications 3 à 6, **caractérisé en ce que** lesdits moyens formant interface pour échanger une information entre l'ordinateur embarqué (20) et l'unité au sol (21) pour gérer les produits (15) sont constitués par deux ports à infrarouges, un premier port étant constitué par une diode électro-luminescente (33a), qui est fixée latéralement au châssis (19) du chariot (17), pour envoyer une information venant de l'ordinateur (20) à une diode réceptrice (33b) qui est disposée sur le bord de la piste (16) et qui est connectée à l'unité au sol (21) dans la zone de chargement (18), et un deuxième port étant constitué par une diode additionnelle (34b) qui est également fixée latéralement au châssis (19), pour recevoir une information à partir de l'unité au sol (21) vers l'ordinateur (20), et qui est adaptée pour faire face, dans la zone de chargement (18), à une diode électro-luminescente additionnelle (34a) qui est connectée à l'unité (21).

8. Dispositif selon l'une ou plusieurs des revendications 3 à 7, **caractérisé en ce que** lesdits moyens de prévention de collision sont constitués par un capteur de proximité (35), qui est rigidement couplé au chariot (17) et qui est dirigé dans la direction d'avance dudit chariot (17), chaque chariot (17) étant muni, à l'arrière, d'un écran (36) dont le contour est tel qu'il permet au capteur (35) d'un chariot arrière (17) de déterminer la présence et la distance du chariot avant (17) même dans des courbes (16a) et des montées (16b) de la piste (16).

9. Dispositif selon la revendication 8, **caractérisé en ce que** ledit capteur (35) est une cellule photo-électrique.

10. Dispositif selon l'une ou plusieurs des revendications 3 à 9, **caractérisé en ce que** lesdits moyens pour détecter la position du chariot sur la piste sont constitués par des capteurs (45, 46, 47), qui sont fixés au châssis (19) et sont dirigés vers l'extérieur à proximité de la piste (16) de façon à lire des trajets respectifs formés sur la piste (16) par des plaques réalisées en matériau métallique, un premier capteur (45) étant conçu pour commander l'activation de l'opération pour arrêter et positionner le chariot (17) au compartiment de déchargement de destination pré-établi (13), un deuxième capteur (46) étant conçu pour démarrer l'étape de ralentissement du chariot (17) dans la zone de chargement (18), le troisième capteur (47) étant adapté pour superviser l'arrêt du chariot (17) dans la zone de chargement (18) dans une position telle que le produit (15) qui vient d'être chargé soit disponible pour le dispositif (31) pour mesurer l'épaisseur du produit (15) et pour le lecteur (32) de l'étiquette munie d'un code-barres, ladite position d'arrêt permettant le fonctionnement desdits ports à infrarouges (33a, 33b, 34a, 34b), lesdits capteurs (45, 46, 47) venant en interface avec un Compteur (48), qui est lui-même connecté de façon opérationnelle audit ordinateur embarqué (20).

11. Dispositif selon la revendication 10, **caractérisé en ce que** lesdits capteurs (45, 46, 47) sont d'un type inductif ou équivalent.

12. Dispositif selon l'une ou plusieurs des revendications 3 à 11, **caractérisé en ce que** lesdits moyens pour décharger le produit (15) à partir du plateau (22) dans le récipient (14) sont constitués par un moteur à engrenages électrique (37), qui pivote avec un axe horizontal par rapport à un support (38), qui est rigidement couplé au châssis (19) et qui est adapté pour déplacer par un mouvement de translation, à l'aide d'un dispositif du type à vis sans fin, une barre de soulèvement/abaissement (39), dont l'extrémité supérieure (39a) est couplée en rotation à la partie arrière (22a) du plateau (22), ledit plateau (22) pivotant de façon centrale à l'aide de charnières (40) par rapport audit support (38).

13. Dispositif selon la revendication 12, **caractérisé en ce que** les moyens de déchargement sont complétés par des goulottes (44), qui sont fixées au bord du râtelier (11), à raison d'une pour chacun desdits compartiments de déchargement (13), lesdites goulottes (44) étant adaptées pour guider la chute des produits (15) à partir du plateau (22) dans le récipient (14).

14. Dispositif selon l'une ou plusieurs des revendications 3 à 13, **caractérisé en ce que** lesdits moyens d'alimentation sont formés par deux contacts glissants, constitués chacun par un bras (41) pour supporter une plaque métallique qui est en contact avec une ligne conductrice correspondante (42), qui s'étend le long de la piste (16) à l'intérieur d'un canal multiple (43) réalisé en matériau isolant, ledit canal multiple (43) étant muni d'au moins deux sièges pour la disposition des lignes conductrices (42) parallèlement entre elles.
